# EUROPÄISCHE PATENTSCHRIFT

(11) **EP 3 932 767 B1**
(45) Veröffentlichungstag und Bekanntmachung des Hinweises auf die Patenterteilung: **22.04.2026**
(21) Anmeldenummer: 21177279.3
(22) Anmeldetag: 02.06.2021
(51) Int. Cl.: B60W 40/06, B60W 40/064, B60W 40/068, B60W 50/00

(54) **VERFAHREN UND VORRICHTUNG ZUR BESTIMMUNG MINDESTENS EINES FAHRBAHNKONTAKTPARAMETERS EINES FAHRZEUGS**
METHOD AND DEVICE FOR DETERMINING AT LEAST ONE ROAD SURFACE CONTACT PARAMETER OF A VEHICLE
PROCÉDÉ ET DISPOSITIF DE DÉTERMINATION D'AU MOINS UN PARAMÈTRE DE CONTACT AVEC LA CHAUSSÉE D'UN VÉHICULE

(30) Priorität: 30.06.2020 DE 102020208189
(43) Veröffentlichungstag der Anmeldung: 05.01.2022
(73) Patentinhaber: VOLKSWAGEN AG, 38440 Wolfsburg (DE)
(72) Erfinder: Bärecke, Frank, 38444 Wolfsburg (DE)

(56) Entgegenhaltungen:
- WO-A1-2019/063589
- DE-A1- 102016 221 975
- DE-A1- 102018 214 882
- DE-A1- 102018 217 193
- US-A1- 2015 260 614

## Beschreibung

Die Erfindung betrifft ein Verfahren und eine Vorrichtung zur Bestimmung mindestens eines Fahrbahnkontaktparameters eines Fahrzeugs, welcher eine Fahrbahn- und/oder eine Reifeneigenschaft des Fahrzeugs repräsentiert.

Aus dem Stand der Technik bekannt sind Verfahren, die unter Nutzung von im Fahrzeug angeordneten Sensoren, beispielsweise Ultraschallsensoren, Piezosensoren oder Beschleunigungssensoren, Parameter bestimmen, die Eigenschaften einer Fahrbahn und/oder des Reifens ermöglichen. Solche Parameter sind u.a. Parameter, die einen Fahrbahnnässegrad, einen Reibwert, eine Straßenrauigkeit, einen Reifentyp, einen Reifenverschleißgrad und/oder einen Schneebedeckungsgrad der Fahrbahn repräsentieren.

Weiter bekannt sind Verfahren, die zuerst den Fahrbahnnässegrad, dann die Straßenrauigkeit und dann den Reifenverschleißgrad bestimmen. Hierzu werden insbesondere verschiedene Frequenzbereiche der von den erläuterten Sensoren erzeugten Signale ausgewertet.

Die US 2015/02160614 A1 offenbart ein Verfahren und ein System zum Sammeln und/oder Überwachen von Straßeneigenschaften. Die Druckschrift beschreibt hierbei, dass typenspezifische Kalibrierdaten genutzt werden, um eine Straßenzustandskategorie zu bestimmen. Diese Kalibrierdaten sind vorbestimmte Beziehungen zwischen Fahrzeugbewegungsgrößen und Straßenzustandsklassen.

Weiter bekannt ist die EP 2 950 290 A1, die die Bereitstellung von Verkehrsinformationen betrifft. In dieser Druckschrift wird beschrieben, dass Kontrollinformationen Informationen über einen Straßenzustand, insbesondere eine Nässe, umfassen können.

Die DE 10 2016 221 975 A1 betrifft ein Verfahren zum Betreiben eines Fahrerassistenzsystems für Kraftfahrzeuge, die jeweils mehrere mit einer Fahrbahn in Kontakt stehende Räder aufweisen, wobei zumindest eines der Kraftfahrzeuge mittels zumindest eines Reibwertmodells wenigstens einen aktuellen Reibwert zwischen zumindest einem der Räder und der Fahrbahn ermittelt, und wobei zumindest eine Fahrerassistenzeinrichtung des jeweiligen Kraftfahrzeugs in Abhängigkeit des ermittelten Reibwerts eingestellt oder kalibriert wird.

Die WO 2019 / 063589 A1 bezieht sich allgemein auf Systeme und Verfahren zur Schätzung der Reibung zwischen einer Straßenoberfläche und einem Fahrzeugreifen.

Die DE 10 2018 214 882 A1 betrifft ein Verfahren zum Bestimmen eines maximalen Reibwerts zwischen einem Fahrzeugreifen und einer Fahrbahn.

Die US 2015 / 260614 A1 betrifft ein Verfahren und ein System zur Erfassung und/oder Überwachung eines Straßenzustandes, welches mit relativ einfachen Mitteln leicht zu bewerkstelligen ist und gleichzeitig eine Skalierbarkeit und allgemeine Verwendbarkeit ermöglicht.

Es stellt sich das technische Problem, ein Verfahren und eine Vorrichtung zur Bestimmung mindestens eines Fahrbahnkontaktparameters eines Fahrzeugs zu schaffen, die eine genaue und zuverlässige, insbesondere robuste, Bestimmung des Fahrbahnkontaktparameters ermöglichen.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Bestimmung mindestens eines Fahrbahnkontaktparameters eines Fahrzeugs. Das Fahrzeug kann insbesondere ein Kraftfahrzeug sein. Der Fahrzeugkontaktparameter repräsentiert eine Fahrbahneigenschaft. Eine Fahrbahneigenschaft kann insbesondere ein Fahrbahnnässegrad, ein Schneebedeckungsgrad oder eine Straßenrauigkeit sein. Auch kann der Fahrbahnkontaktparameter eine Reifeneigenschaft des Fahrzeugs repräsentieren. Ein solcher Parameter kann beispielsweise einen Reifentyp oder einen Reifenverschleißgrad repräsentieren. Auch ist es möglich, dass der Fahrbahnkontaktparameter sowohl Fahrbahn- als auch Reifeneigenschaften repräsentiert. In diesem Fall kann der Fahrbahnkontaktparameter beispielsweise einen Reibwert der Reibung zwischen Fahrbahn und Reifen repräsentieren.

In dem Verfahren erfolgt ein Festlegen mindestens eines Kalibrierabschnitts in einem Straßennetz. Der Kalibrierabschnitt kann hierbei ein Straßenabschnitt, insbesondere ein Fahrbahnabschnitt oder ein Fahrspurabschnitt, sein. Ein Fahrbahnabschnitt kann hierbei mehrere Fahrspuren umfassen. Der Kalibrierabschnitt kann hierbei eine vorbestimmte Länge aufweisen. Insbesondere ist der Kalibrierabschnitt somit ein Teilabschnitt einer Straße in dem Straßennetz.

Das Straßennetz kann ein Gesamtgefüge von Straßen innerhalb eines vorbestimmten Verkehrsraums, beispielsweise innerhalb einer Region, einer Stadt oder einem Land, bezeichnen. Weiter dem Kalibrierabschnitt Informationen über die Größe und räumliche Lage des Kalibrierabschnitts in einem Referenzkoordinatensystem, beispielsweise einem globalen Referenzkoordinatensystem, zugeordnet sein.

Weiter ist dem Kalibrierabschnitt mindestens ein abschnittsspezifischer Wert oder Wertebereich des mindestens einen Fahrbahnkontaktparameters zugeordnet. Dass dem Kalibrierabschnitt ein abschnittsspezifischer Wert oder Wertebereich zugeordnet ist bedeutet, dass sich der Wert des Fahrbahnkontaktparameters in dem Kalibrierabschnitt nicht oder nicht mehr als ein vorbestimmtes Maß ändert. Insbesondere kann der Wert in dem Kalibrierabschnitt konstant oder im Wesentlichen konstant sein. Der Wert oder Wertebereich kann vorbestimmt sein oder in einer nachfolgend noch erläuterten Weise bestimmt werden.

Informationen über den Kalibrierabschnitt, insbesondere dessen räumliche Lage und/oder Größe, sowie der abschnittsspezifische Wert oder Wertebereich können hierbei in abrufbarer Weise gespeichert werden, insbesondere in einer Speichereinrichtung. Vorzugsweise werden Informationen über den Kalibrierabschnitt sowie den abschnittsspezifischen Wert oder Wertebereich in einer Servereinrichtung gespeichert und in abrufbarer Weise bereitgestellt. Diese Servereinrichtung kann Teilnehmer eines Netzwerks sein, beispielsweise des Internets, wobei ein Fahrzeug bzw. eine Fahrzeugkommunikationseinrichtung ebenfalls Teilnehmer dieses Netzwerks sein kann, der Informationen über das Netzwerk abrufen kann. In diesem Fall können diese Informationen, insbesondere von einem Fahrzeug, abgerufen werden, insbesondere über eine drahtlose Kommunikation. Allerdings können die Informationen auch in einer im Fahrzeug angeordneten Speichereinrichtung gespeichert sein.

Weiter erfolgt ein Bestimmen, ob sich das Fahrzeug in dem Kalibrierabschnitt befindet. Hierzu kann die (Eigen-)Position des Fahrzeugs bestimmt werden, beispielsweise durch Auswertung von Ausgangssignalen mindestens eines Positionssensors. Entsprechende Positionssensoren sind dem Fachmann hierbei bekannt. Ein Positionssensor kann insbesondere ein GNSS-Sensor sein. Selbstverständlich können jedoch auch andere Positionssensoren verwendet werden. Weiter kann festgestellt werden, dass sich das Fahrzeug in dem Kalibrierabschnitt befindet, wenn die Position des Fahrzeugs innerhalb des räumlichen Bereichs des Kalibrierabschnitts liegt, indem die Informationen über die Lage des räumlichen Bereichs und insbesondere dessen Größe und/oder Form - wie vorhergehend erläutert - aus einer Speichereinrichtung abgerufen werden können.

Weiter erfolgt ein Bestimmen des mindestens einen Fahrbahnkontaktparameters durch Auswertung mindestens eines Ausgangssignals eines Fahrzeugsensors, wobei das Ausgangssignal während der Fahrt des Fahrzeugs in dem mindestens einen Kalibrierabschnitt erzeugt wird.

Der Fahrzeugsensor kann insbesondere ein Sensor sein, dessen Ausgangssignal sich bei Änderung von Fahrbahneigenschaften und/oder bei Änderung von Reifeneigenschaften verändert. Beispielhafte solche Fahrzeugsensoren sind Ultraschallsensoren, Piezosensoren, die z.B. in einer Radhausschale des Fahrzeugs verbaut sind, oder Beschleunigungssensoren, die beispielsweise in einer Lauffläche des Reifens angeordnet sind.

Es ist auch möglich, dass mehrere Fahrbahnkontaktparameter, also insbesondere zwei oder mehr als zwei Fahrbahnkontaktparameter, durch Auswertung eines Ausgangssignals eines einzelnen Fahrzeugsensors oder aber durch Auswertung von Ausgangssignalen mehrerer Fahrzeugsensoren bestimmt werden, wobei diese Ausgangssignale/dieses Ausgangssignal während der Fahrt des Fahrzeugs in dem mindestens einen Kalibrierabschnitt erzeugt wird.

Ebenfalls ist es möglich, dass ein Kalibrierabschnitt ein parameterspezifischer Kalibrierabschnitt ist. Dies kann bedeuten, dass einem Kalibrierabschnitt nur ein oder mehrere ausgewählte(r) Fahrbahnkontaktparameter zugeordnet ist/sind, wobei diese(r) dem Kalibrierabschnitt zugeordnete(n) Fahrbahnkontaktparameter durch Auswertung des mindestens einen Ausgangssignals bestimmt wird/werden. Informationen über die Zuordnung eines Fahrbahnkontaktparameters zu einem Kalibrierabschnitt können hierbei entsprechend den vorhergehenden Ausführungen in abrufbarer Weise gespeichert sein. Ist der Kalibrierabschnitt ein parameterspezifischer Kalibrierabschnitt, so wird ein Fahrbahnkontaktparameter, der von dem/den Fahrbahnkontaktparameter(n), der/die dem Kalibrierabschnitt zugeordnet ist/sind, verschieden ist, nicht durch Auswertung des Ausgangssignals des Fahrzeugsensors bestimmt, welches während der Fahrt des Fahrzeugs in dem mindestens einen Kalibrierabschnitt erzeugt wird.

Der Kalibrierabschnitt in dem Straßennetz kann insbesondere derart festgelegt werden, dass der mindestens eine Fahrbahnkontaktparameter möglichst zuverlässig in dem Kalibrierabschnitt bestimmt werden kann. Insbesondere kann der Kalibrierabschnitt derart festgelegt werden, dass eine Streuung von Fahrbahneigenschaften in dem Kalibrierabschnitt kleiner als ein vorbestimmter Schwellwert ist. Dies kann bedeuten, dass mindestens eine Fahrbahneigenschaft, vorzugsweise jedoch mehrere Fahrbahneigenschaften, (jeweils) in einem Wertebereich liegen, wobei eine Differenz zwischen einem maximalen Wert und minimalen Wert des Wertebereichs kleiner als oder gleich einem vorbestimmten Schwellwert ist. Ebenfalls kann der Kalibrierabschnitt derart festgelegt werden, dass die Streuung von mindestens einer Fahrbahneigenschaft in Fahrtrichtung entlang des Kalibrierabschnitts kleiner als ein vorbestimmter Schwellwert ist. Alternativ oder kumulativ kann der Kalibrierabschnitt derart festgelegt werden, dass die Streuung der Fahrbahneigenschaft quer zur Fahrtrichtung kleiner als ein vorbestimmter Schwellwert ist.

Alternativ oder kumulativ kann der mindestens eine Kalibrierabschnitt derart festgelegt werden, dass eine Veränderung mindestens einer Fahrbahneigenschaft reproduzierbar ist. Dies kann bedeuten, dass eine Abweichung zwischen dem maximalen Wert und einem minimalen Wert einer Menge von Fahrbahneigenschaft, kleiner als oder gleich einem vorbestimmten Schwellwert ist, wobei die Fahrbahneigenschaften diese Menge jeweils bei einer Durchfahrt einer vorbestimmten Anzahl von Durchfahrten des Kalibrierabschnitts mit dem gleichen Fahrzeug bestimmt werden. Solche Veränderungen der Fahrbahneigenschaft können beispielsweise durch sich entlang der Kalibrierabschnitts verändernde Fahrbahnmarkierungen oder sich verändernde Fahrbahnbegrenzungen ergeben.

Weiter alternativ oder kumulativ kann der mindestens eine Kalibrierabschnitt derart festgelegt werden, dass eine oder mehrere Ursachen, die zur Veränderung der mindestens einen Fahrbahneigenschaft führen, zuverlässig detektierbar sind und dann bei der Bestimmung des Fahrbahnkontaktparameters berücksichtigt werden können. Eine Ursache kann beispielsweise durch einen (weiteren) Fahrzeugsensor detektiert werden, beispielsweise ein Radarsensor oder eine Bilderfassungseinrichtung, insbesondere eine Fahrzeugkamera. So ist es möglich, bei der Bestimmung des mindestens einen Fahrbahnkontaktparameters zusätzlich Ausgangssignale des Fahrzeugsensors zu berücksichtigen, der Ursachen für nicht fahrbahnbedingte Veränderungen der Ausgangssignale erfasst. Solche nicht fahrbahnbedingten Ursachen können beispielsweise Fahrbahnbegrenzungen und/oder weitere Fahrzeuge sein.

Dies kann bedeuten, dass eine Kausalitätsbeziehung zwischen Detektion der Ursache und Veränderung der mindestens einen Fahrbahneigenschaft, insbesondere auch der Veränderung des Ausgangssignals des Fahrzeugsensors, reproduzierbar ist. Dies wiederum kann bedeuten, dass - wenn für eine vorbestimmte Anzahl von Durchfahrten des Kalibrierabschnitts mit dem gleichen Fahrzeug sowohl die Ursache als auch die Veränderung detektiert wird - eine Differenz zwischen dem maximalen Wert und dem minimalen Wert dieser Menge von ursachenbedingten Veränderung der mindestens einen Fahrbahneigenschaft kleiner als ein vorbestimmter Schwellwert ist.

In einer weiteren Ausführungsform wird durch Auswertung eines Ausgangssignals mindestens eines (weiteren) Fahrzeugsensors das Vorhandensein und gegebenenfalls mindestens eine weitere Eigenschaft einer Fahrbahnbegrenzung und/oder eines weiteren Fahrzeugs bei der Fahrt des Fahrzeugs in dem mindestens einen Kalibrierabschnitt bestimmt, wobei der mindestens eine Fahrbahnkontaktparameter durch Auswertung des mindestens einen Ausgangssignals des Fahrzeugsensors zur Erfassung von Fahrbahnkontakteigenschaften als auch in Abhängigkeit der Ausgangssignale des (weiteren) Sensors bestimmt wird.

Weiter alternativ oder kumulativ kann der mindestens eine Kalibrierabschnitt derart festgelegt werden, dass eine Veränderung der mindestens einen Fahrbahneigenschaft, die durch eine nicht erfassbare Ursache bedingt ist, kleiner als ein vorbestimmter Schwellwert ist. Solche nicht erfassbare Ursache kann beispielsweise eine Fahrbahnverschmutzung, z.B. durch Sand, sein. Weiter kann eine nicht erfassbare Ursache ein Störgeräusch, z.B. durch andere Fahrzeuge, sein.

Durch die Bestimmung des Fahrbahnkontaktparameters während der Fahrt in dem festgelegten Kalibrierabschnitt ergibt sich in vorteilhafter Weise, dass ein Fahrbahnkontaktparameter zuverlässig und genau bestimmt werden kann, da sich - wie vorhergehend erläutert - aus der Zuordnung eines abschnittspezifischen Werts oder Wertebereichs ergibt, dass sich der Fahrbahnkontaktparameter in dem Kalibrierabschnitt nicht oder nicht mehr als ein vorbestimmtes Maß ändert.

Weiter erfindungsgemäß wird der derart bestimmte mindestens eine Fahrbahnkontaktparameter, insbesondere dessen Wert, mit dem abschnittsspezifischen Wert oder Wertebereich verglichen. So kann beispielsweise eine Differenz zwischen dem für die Fahrt des Fahrzeugs in dem Kalibrierabschnitt bestimmten Fahrbahnkontaktparameter und dem entsprechenden abschnittsspezifischen Wert bestimmt werden. Auch kann eine solche Differenz zwischen einem minimalen Wert des Wertebereichs, einem mittleren Wert des Wertebereichs oder einem maximalen Wert des Wertebereichs bestimmt werden. Auch kann bestimmt werden, ob der Fahrbahnkontaktparameter in dem Wertebereich liegt.

Erfindungsgemäß wird ein kalibrierter Zustand eines unkalibrierten Fahrzeugs unter Verwendung des abschnittsspezifischen Werts oder Wertebereichs hergestellt oder ein unkalibrierter Zustand eines kalibrierten Fahrzeugs detektiert, wenn der mindestens eine Fahrbahnkontaktparameter mehr als ein vorbestimmtes Maß von dem abschnittsspezifischen Wert oder Wertebereich abweicht. Dies kann insbesondere dann der Fall sein, wenn die vorhergehend erläuterte Differenz größer als ein vorbestimmter Schwellwert ist. Auch kann dies der Fall sein, wenn der Fahrbahnkontaktparameter nicht in dem vorbestimmten Wertebereich liegt.

Ein Fahrzeug kann hierbei einen kalibrierten oder einen unkalibrierten Zustand aufweisen. In einem kalibrierten Zustand kann das Fahrzeug auch als kalibriertes Fahrzeug bezeichnet werden. In einem unkalibrierten Zustand kann das Fahrzeug auch als unkalibriertes Fahrzeug bezeichnet werden.

Aus einem unkalibrierten Zustand heraus ein kalibrierter Zustand hergestellt werden, indem die Bestimmung des Fahrbahnkontaktparameters durch Auswertung des mindestens einen Ausgangssignals des Fahrzeugsensors derart eingestellt wird und erfolgt bzw. vorgenommen wird, dass der Fahrbahnkontaktparameter die tatsächlich vorhandene Fahrbahnkontakteigenschaft repräsentiert bzw. nicht mehr als ein vorbestimmtes Maß von dieser tatsächlich vorhandenen Fahrbahnkontakteigenschaft abweicht. Dies kann der Fall sein, wenn der wie vorgeschlagen bestimmte Fahrbahnkontaktparameter nicht mehr als ein vorbestimmtes Maß von dem abschnittsspezifischen Wert oder Wertebereich abweicht.

Werden z.B. zur Bestimmung, insbesondere zur Auswertung des Ausgangssignals, Parameter verwendet, beispielsweise Parameter von mathematischen Operationen, so kann die Kalibrierung die Bestimmung dieser Parameter umfassen. Auch kann die Kalibrierung eine Bestimmung von Filterparametern zur Filterung des Ausgangssignals umfassen. Auch kann die Kalibrierung die Auswahl einer oder mehrerer mathematischer Operation(en) zur Bestimmung des Fahrbahnkontaktparameters und gegebenenfalls deren Sequenz umfassen. Selbstverständlich ist dem Fachmann bewusst, dass die Kalibrierung auch noch weitere Maßnahmen umfassen kann, durch die die Bestimmung des Fahrbahnkontaktparameters eingestellt werden kann.

Insbesondere kann die Kalibrierung derart erfolgen, dass der mindestens eine Fahrbahnkontaktparameter, der durch Auswertung des mindestens eines Ausgangssignals, welches während der Fahrt des Fahrzeugs in dem mindestens einen Kalibrierabschnitt bestimmt wurde, nicht mehr als ein vorbestimmter Wert von einem abschnittsspezifischen Wert oder Wertebereich liegt bzw. in dem abschnittsspezifischen Wertebereich liegt.

Hierdurch ergibt sich in vorteilhafter Weise eine zuverlässige Kalibrierung des Fahrzeugs, wodurch dieses auch in Abschnitten des Straßennetzes, die von dem Kalibrierabschnitt verschieden sind, zuverlässig und genau einen Fahrbahnkontaktparameter bestimmen kann.

Ist das Fahrzeug kalibriert und wird die erläuterte Abweichung zwischen dem wie vorgeschlagen bestimmten Fahrbahnkontaktparameter im abschnittsspezifischen Wert oder Wertebereich detektiert, so kann auch ein unkalibrierter Zustand des Fahrzeugs detektiert werden. Eine Information über einen unkalibrierten Zustand kann an einen Fahrzeugführer und/oder ein übergeordnetes System übertragen werden. Der Fahrzeugführer kann beispielsweise akustisch, optisch oder in anderer Art und Weise über einen aufgetretenen unkalibrierten Zustand informiert werden. Auch ist es möglich, dass eine solche Information an ein Fahrzeug(assistenz)system übertragen wird. Weiter kann der Betrieb des Fahrzeugs, insbesondere eine Funktion eines Fahrzeug(assistenz)systems, an einen unkalibrierten oder kalibrierten Zustand angepasst werden.

Hierdurch ergibt sich in vorteilhafter Weise eine zuverlässige Detektion von einem (neu auftretenden) unkalibrierten Zustand. Ein solcher unkalibrierter Zustand kann beispielsweise auftreten, wenn ein Reifenwechsel erfolgt ist, ein Reifenverschleißgrad sich mehr als ein vorbestimmtes Maß verändert hat, eine Zuladung des Fahrzeugs um mehr als ein vorbestimmtes Maß verändert wurde oder weitere Änderungen oder Defekte am Fahrzeug vorgenommen wurden/auftraten. Somit können auch unspezifische Ursachen der Veränderung des kalibrierten Zustand des Fahrzeugs detektiert werden.

Auch ermöglicht das Verfahren in vorteilhafter Weise, einen unabhängig von dem vorgeschlagenen Verfahren bestimmten Fahrbahnkontaktparameter, z.B. einen in Abhängigkeit einer Laufleistung und/oder eines Verschleißzählers bestimmten Reifenverschleißgrad, einen in Abhängigkeit eines geänderten Verhältnisses einer Drehzahl zu einer GPS-Geschwindigkeit des Fahrzeugs und/oder in Abhängigkeit eines Reifendrucksensors detektierten Reifenwechsels, zu überwachen oder zu plausibilisieren.

Durchfährt ein Fahrzeug Kalibrierabschnitte, so kann in jedem Kalibrierabschnitt eine Bestätigung des kalibrierten Zustands erfolgen.

In einer weiteren Ausführungsform wird zur Herstellung des kalibrierten Zustands, also bei der Kalibrierung, die Auswertung des Ausgangssignals derart angepasst, dass der mindestens eine Fahrbahnkontaktparameter nicht mehr als ein vorbestimmtes Maß von dem abschnittsspezifischen Wert oder Wertebereich abweicht. Dies und entsprechende technische Vorteile wurden vorhergehend bereits erläutert.

In einer weiteren Ausführungsform wird ein kalibrierter Zustand eines unkalibrierten Fahrzeugs unter Verwendung von abschnittsspezifischen Werten oder Wertebereichen von mindestens zwei voneinander verschiedenen Kalibrierabschnitten hergestellt. Insbesondere können die mindestens zwei voneinander verschiedenen Kalibrierabschnitte voneinander verschiedene abschnittsspezifische Werte oder Wertebereiche des mindestens einen Fahrbahnkontaktparameters aufweisen bzw. können den mindestens zwei voneinander verschiedenen Kalibrierabschnitten diese verschiedenen Werte oder Wertebereiche zugeordnet sein.

Hierdurch erhöht sich in vorteilhafter Weise die Zuverlässigkeit und Genauigkeit der Kalibrierung und somit auch die Zuverlässigkeit und Genauigkeit des derart kalibrierten fahrzeugbestimmten Fahrbahnkontaktparameters. So ist es möglich, dass voneinander verschiedene Reifentypen und/oder Reifen mit voneinander verschiedenen Reifenverschleißgraden bei gleichen Fahrbahneigenschaften, insbesondere also innerhalb eines einzelnen Kalibrierabschnitts, zu gleichen Ausgangssignalen des Fahrzeugsensors führen, wodurch eine genaue Kalibrierung erschwert ist.

Durch die Verwendung von abschnittsspezifischen Werten oder Wertebereichen von mehreren Kalibrierabschnitten kann die Wahrscheinlichkeit erhöht werden, dass voneinander verschiedene Reifentypen und/oder Reifen auch zu verschiedenen Ausgangssignalen führen, wodurch wiederum eine Zuverlässigkeit der Kalibrierung verbessert wird.

In einer weiteren Ausführungsform wird der mindestens eine Kalibrierabschnitt in Abhängigkeit von Konstruktionsinformationen festgelegt. Konstruktionsinformationen können beispielsweise Informationen über einen Fertigstellungszeitpunkt oder einen Instandsetzungszeitpunkt eines Straßenabschnitts umfassen. Weiter können Konstruktionsinformationen Informationen über eine Fahrbahnkrümmung, insbesondere in Fahrbahnlängs- und/oder in Fahrbahnquerrichtung, umfassen. Weiter können Konstruktionsinformationen Informationen über Eigenschaften eines verwendeten Straßenbelags umfassen. Ebenfalls können Konstruktionsinformationen Informationen über Eigenschaften, insbesondere ein Vorhandensein, eine räumliche Lage, von Fahrbahnmarkierungen und/oder Fahrbahnbegrenzungen umfassen.

So kann beispielsweise ein Straßenabschnitt als Kalibrierabschnitt festgelegt werden, wenn eine zeitliche Differenz zwischen dem aktuellen Zeitpunkt und dem Fertigstellungszeitpunkt bzw. dem letzten Instandsetzungszeitpunkt kleiner als ein vorbestimmter Schwellwert ist. Alternativ oder kumulativ kann ein Straßenabschnitt als Kalibrierabschnitt festgelegt werden, wenn eine Fahrbahnkrümmung kleiner als ein vorbestimmter Schwellwert ist. Weiter alternativ oder kumulativ kann ein Straßenabschnitt als Kalibrierabschnitt festgelegt werden, wenn Eigenschaften des verwendeten Straßenbelags vorbestimmten Eigenschaften entsprechen oder nicht mehr als ein vorbestimmtes Maß von diesen abweichen. Weiter alternativ oder kumulativ kann ein Straßenabschnitt als Kalibrierabschnitt festgelegt werden, wenn Eigenschaften von Straßenbegrenzungen und/oder Fahrbahnmarkierungen vorbestimmten Eigenschaften entsprechen.

Weiter alternativ oder kumulativ wird der mindestens eine Kalibrierabschnitt in Abhängigkeit von Wetterinformationen festgelegt. So kann beispielsweise ein Straßenabschnitt als Kalibrierabschnitt festgelegt werden, falls im Bereich des Straßenabschnitts Regenfall oder Schneefall detektiert wird oder eine Zeitdauer zwischen dem letzten Auftreten von Regenfall oder Schneefall in diesem Bereich und dem aktuellen Zeitpunkt nicht länger als eine vorbestimmte Zeitdauer ist. Allerdings ist es auch möglich, dass ein Straßenabschnitt dann als Kalibrierabschnitt festgelegt wird, wenn in diesem Bereich kein Regenfall oder Schneefall festgestellt wird und/oder eine Zeitdauer zwischen dem letzten Auftreten von Regenfall oder Schneefall in diesem Bereich und dem aktuellen Zeitpunkt länger als eine vorbestimmte Zeitdauer ist.

Weiter alternativ oder kumulativ wird der mindestens eine Kalibrierabschnitt in Abhängigkeit von Verkehrsinformationen festgelegt. Beispielsweise kann ein Straßenabschnitt als Kalibrierabschnitt festgelegt werden, wenn eine Durchfahrrate größer als ein bestimmter Schwellwert ist, wobei die Durchfahrrate die Anzahl von Fahrzeugen bezeichnet, die den Straßenabschnitt in einem vorbestimmten Zeitintervall be- bzw. durchfahren.

Hierbei kann davon ausgegangen werden, dass bei hohen Durchfahrraten nicht erfassbare Beeinflussungen einer Fahrbahneigenschaft gering sind, beispielsweise eine Verschmutzung durch Sand.

Alternativ oder kumulativ kann ein Straßenabschnitt als Kalibrierabschnitt festgelegt werden, wenn die Durchfahrrate kleiner als ein weiterer vorbestimmter Schwellwert ist. Hierdurch kann in vorteilhafter Weise erreicht werden, dass Störeinflüsse durch andere Fahrzeuge im Kalibrierabschnitt die Bestimmung des Fahrbahnkontaktparameters nicht oder nur in einem tolerierbaren Maß beeinflussen, wodurch sich wiederum die Genauigkeit der Bestimmung erhöht.

Die erläuterte Festlegung des Kalibrierabschnitts in Abhängigkeit dieser Informationen ermöglicht in vorteilhafter Weise die Bestimmung von Straßenabschnitten, die zur Bestimmung des Fahrbahnkontaktparameters in genauer Weise geeignet sind, wodurch sich die Genauigkeit bei der späteren Bestimmung erhöht.

In einer weiteren Ausführungsform wird ein Aktivierungszustand eines Kalibrierabschnitts bestimmt, wobei das Bestimmen des mindestens einen Fahrbahnkontaktparameters durch Auswertung mindestens eines Ausgangssignals eines Fahrzeugsensors nur dann erfolgt, wenn ein aktiver Zustand des Kalibrierabschnitts detektiert wird. Informationen über einen Aktivierungszustand können dem Kalibrierabschnitt zugeordnet werden und wie vorhergehend erläutert ebenfalls in abrufbarer Weise gespeichert sein. Ein aktivierter Zustand bezeichnet einen Zustand des Kalibrierabschnitts, in dem der von einem kalibrierten Fahrzeug bestimmte Fahrbahnkontaktparameter nicht mehr als ein vorbestimmtes Maß von dem abschnittsspezifischen Wert oder Wertebereich abweicht bzw. eine zuverlässige Bestimmung des Werts/Wertebereichs durch ein kalibriertes Fahrzeug möglich ist.

Ein deaktivierter Zustand bezeichnet einen Zustand des Kalibrierabschnitts, in dem der von einem kalibrierten Fahrzeug bestimmte Fahrbahnkontaktparameter mehr als ein vorbestimmtes Maß von dem abschnittsspezifischen Wert oder Wertebereich abweicht bzw. keine zuverlässige Bestimmung des Werts/Wertebereichs durch ein kalibriertes Fahrzeug möglich ist..

Es ist möglich, dass der Aktivierungszustand in Abhängigkeit von Konstruktionsinformationen und/oder in Abhängigkeit von Wetterinformationen und/oder in Abhängigkeit von Verkehrsinformationen eingestellt wird. Beispielsweise kann ein aktivierter Zustand des Kalibrierabschnitts eingestellt werden, wenn die Durchfahrrate in einem vorbestimmten Wertebereich liegt, wobei ein deaktivierter Zustand eingestellt wird, wenn die Durchfahrrate außerhalb des vorbestimmten Wertebereichs liegt. Auch kann ein aktivierter Zustand eingestellt werden, wenn im Bereich des Kalibrierabschnitts Regenfall oder Schneefall auftritt oder nicht mehr als eine vorbestimmte Zeitdauer seit dem letzten Auftreten von Schneefall oder Regenfall vergangen ist oder wenn kein Schneefall oder kein Regenfall auftritt und/oder mehr als eine vorbestimmte Zeitdauer seit dem letzten Auftreten von Schneefall oder Regenfall vergangen ist.

So ist zu beachten, dass aufgewirbelte Fahrbahnnässe bei hoher Achslast deutlich größer ist als bei geringer Achslast eines auf der Fahrbahn fahrenden Fahrzeugs. So wird bei schweren Fahrzeugen neben der oberflächlichen Nässe auch die tiefer in der Fahrbahn gedrungene Nässe mit aufgewirbelt. Am deutlichsten tritt dies z.B. bei einer Fahrbahn auf, die durch viele leichte Fahrzeuge oberflächlich trocken gefahren ist, wobei dann ein schwereres Fahrzeug wie z.B. ein LKW deutlich Nässe aufwirbelt. Ursache hierfür ist, dass ein Reifen, welcher mit einer hohen Kraft gegen/in die Fahrbahn gedrückt wird, sich besonders stark in diese einarbeitet. Dieser Umstand ist beachtenswert, wenn z.B. ein Verfahren zur Bestimmung des Nässegrads der Fahrbahn in einem nassen Zustand der Fahrbahn kalibriert werden soll. Vorzugsweise sollte die Kalibrierung bei wenig freigefahrener Nässe erfolgen. Dies kann gewährleistet sein, wenn ein entsprechender Kalibrierabschnitt nur für eine vorbestimmte Zeitdauer nach dem Ende des Regenfalls als Kalibrierabschnitts aktiviert ist.

In diesem Fall kann nach der Bestimmung, ob sich das Fahrzeug in dem Kalibrierabschnitt befindet, bestimmt werden, die Bestimmung erfolgen, ob sich der Kalibrierabschnitt in einem aktivierten oder deaktivierten Zustand befindet, wobei das Bestimmen des mindestens einen Fahrbahnkontaktparameters nur erfolgt, wenn sich der Kalibrierabschnitt in einem aktivierten Zustand befindet.

Hierdurch kann sichergestellt werden, dass eine möglichst genaue Bestimmung des Fahrbahnkontaktparameters erfolgt, da keine Bestimmung in einem als Kalibrierabschnitt festgelegten Straßenabschnitts folgt, der keine Bestimmung mit der gewünschten Zuverlässigkeit ermöglicht.

In einer weiteren Ausführungsform wird der Aktivierungszustand des Kalibrierabschnitts in Abhängigkeit von Wetterinformationen und/oder Verkehrsinformationen eingestellt. Dies und entsprechende Vorteile wurden vorhergehend bereits erläutert.

In einer weiteren Ausführungsform wird für einen Straßenabschnitt der mindestens eine Fahrbahnkontaktparameter von einer Mehrzahl von kalibrierten Fahrzeugen bestimmt. Weiter wird der Straßenabschnitt als Kalibrierabschnitt festgelegt oder die Festlegung des Straßenabschnitts als Kalibrierabschnitt aufrechterhalten oder ein deaktivierter Kalibrierabschnitt aktiviert, falls die in einem vorbestimmten Zeitintervall von mindestens einer vorbestimmten Anzahl von kalibrierten Fahrzeugen bestimmten Fahrbahnkontaktparameter nicht mehr als ein vorbestimmtes Maß voneinander abweichen. Mit anderen Worten wird eine Streuung der Fahrbahnkontaktparameter, die von mehreren kalibrierten Fahrzeugen für den Straßenabschnitt bestimmt werden, analysiert, wobei die Festlegung als Kalibrierabschnitt nur dann erfolgt oder aufrechterhalten wird bzw. ein aktivierter Zustand des Kalibrierabschnitts nur dann eingestellt wird, wenn die Streuung kleiner als ein vorbestimmter Schwellwert ist.

In diesem Fall kann davon ausgegangen werden, dass sich die Fahrbahneigenschaften des Straßenabschnitts nicht oder nicht mehr als ein vorbestimmtes Maß ändern, da eine Mehrzahl von kalibrierten Fahrzeugen im Wesentlichen gleiche Fahrbahnkontaktparameter bestimmt. Hierdurch ergibt sich in vorteilhafter Weise, dass solche Straßenabschnitte als Kalibrierabschnitte zur Bestimmung eines Fahrbahnkontaktparameters verwendet werden, die eine zuverlässige und genaue Bestimmung des Fahrbahnkontaktparameters ermöglichen.

Weiter wird der Straßenabschnitt nicht als Kalibrierabschnitt festgelegt oder die Festlegung des Straßenabschnitts als Kalibrierabschnitt nicht aufrechterhalten oder der Kalibrierabschnitt deaktiviert, falls die in dem vorbestimmten Zeitintervall von mindestens einer vorbestimmten Anzahl von kalibrierten Fahrzeugen bestimmten Parameter mehr als vorbestimmtes Maß voneinander abweichen oder die Anzahl der in dem vorbestimmten Zeitintervall bestimmten Fahrbahnkontaktparameter kleiner als ein vorbestimmter Schwellwert ist. Mit anderen Worten wird also ein Straßenabschnitt nicht als Kalibrierabschnitt verwendet, in dem die vorhergehend erläuterte Streuung größer als ein vorbestimmter Schwellwert ist oder die Anzahl von kalibrierten Fahrzeugen, die in dem entsprechenden Straßenabschnitt den mindestens einen Fahrbahnkontaktparameter bestimmen, kleiner als ein vorbestimmter Schwellwert ist, was eine zuverlässige Feststellung von konstanten oder im Wesentlichen konstanten Fahrbahneigenschaften nicht ermöglicht.

Hierdurch ergibt sich vorteilhafter Weise, dass Straßenabschnitte, die (temporär) zur zuverlässigen und genauen Bestimmung eines Fahrbahnkontaktparameters nicht geeignet sind, nicht zu dessen Bestimmung verwendet werden bzw. Straßenabschnitte, für die keine zuverlässige Aussage über die Konstanz von Fahrbahneigenschaften gemacht werden kann, ebenfalls nicht zur Bestimmung des Fahrbahnkontaktparameters dienen.

Insgesamt ergibt sich somit in vorteilhafter Weise eine Verbesserung der Zuverlässigkeit und Genauigkeit bei der Bestimmung des Fahrbahnkontaktparameters.

In einer weiteren Ausführungsform wird für einen Kalibrierabschnitt oder einen nicht als Kalibrierabschnitt festgelegten Straßenabschnitt der abschnittsspezifische Wert oder Wertebereich des mindestens einen Fahrbahnkontaktparameters in Abhängigkeit von mindestens einem Fahrbahnkontaktparameter bestimmt oder aktualisiert, der von mindestens einem kalibrierten Fahrzeug bestimmt wird. Vorzugsweise wird für einen Kalibrierabschnitt oder einen nicht als Kalibrierabschnitt festgelegten Straßenabschnitt der abschnittsspezifische Wert oder Wertebereich des mindestens einen Fahrbahnkontaktparameters in Abhängigkeit von Fahrbahnkontaktparametern bestimmt oder aktualisiert, die von kalibrierten Fahrzeugen bestimmt werden. Beispielsweise kann ein Mittelwert von einer vorbestimmten Anzahl von kalibrierten Fahrzeugen in einem Straßenabschnitt bzw. in einem Kalibrierabschnitt bestimmten Fahrbahnkontaktparameter bestimmt werden und als abschnittsspezifischer Wert dieses Kalibrier- oder Straßenabschnitts festgelegt werden. Auch ist es möglich, dass ein Wertebereich bestimmt wird, der z.B. eine vorbestimmte Prozentzahl, beispielsweise mehr als 75 %, der Fahrbahnkontaktparameter umfasst, die von einer vorbestimmten Anzahl von kalibrierten Fahrzeugen für den Straßenabschnitt bzw. Kalibrierabschnitt bestimmt wurden.

Weiter ist es möglich, dass die derart bestimmten abschnittsspezifischen Werte oder Wertebereiche gegebenenfalls Informationen über eine solche Lage des jeweiligen Straßenabschnitts in abrufbarer Weise in einer Speichereinrichtung, beispielsweise der vorhergehend erläuterten Servereinrichtung, gespeichert werden. Dies ermöglicht in vorteilhafter Weise den Aufbau einer Fahrbahnkontaktparameterkarte. Insbesondere ist es also möglich, den Fahrbahnkontaktparameter abschnittsspezifisch zu speichern. Diese Informationen können dann von anderen Fahrzeugen abgerufen werden, z.B. für einen Betrieb des Fahrzeugs verwendet werden, beispielsweise durch einen an den abschnittsspezifischen Fahrbahnkontaktparameter angepassten Betrieb.

Insbesondere ist es möglich, eine Nässekarte zu erstellen, die Informationen über die Nässegrade verschiedener Straßenabschnitte beinhaltet. Selbstverständlich kann auch eine Fahrbahnrauigkeitskarte und eine Schneebedeckungskarte in entsprechender Art und Weise erstellt werden.

Durch den Aufbau einer Fahrbahnkontaktparameterkarte ergibt sich in vorteilhafter Weise, dass Fahrzeuge die entsprechenden Informationen für eine Fahrzeugsteuerung oder einen Fahrzeugbetrieb verwenden können, was in vorteilhafter Weise eine Betriebssicherheit erhöht. Das vorgeschlagene Verfahren kann auch den Kalibrieraufwand für die Bestimmung von Fahrbahnkontaktparametern minimieren. Insbesondere ist es möglich, ein unkalibriertes oder ein teilkalibriertes Fahrzeug vollständig zu kalibrieren, indem es durch mindestens einen, vorzugsweise jedoch mehrere, festgelegte Kalibrierabschnitte fährt. Dies kann ermöglichen, dass die Kalibrierung nach der Herstellung des Fahrzeugs nicht unmittelbar, sondern, insbesondere automatisiert, erfolgt, wenn das Fahrzeug nach dem Kauf erstmalig in Betrieb genommen wird.

Erfindungsgemäß wird der Fahrbahnkontaktparameter, der von einem kalibrierten Fahrzeug bestimmt wurde, einem Gewicht oder einem Gewichtsbereich von Fahrzeugen zugeordnet.

Somit ist es möglich, dass jedem Kalibrierabschnitt mehrere abschnittsspezifische Werte oder Wertebereiche zugeordnet sind, die jeweils wiederum verschiedenen Gewichten oder Gewichtsbereichen von Fahrzeuge zugeordnet sind. Zur Kalibrierung eines Fahrzeugs bzw. zur Überwachung des Kalibrierzustands wird erfindungsgemäß der gewichts- und abschnittsspezifische Wert des Fahrbahnkontaktparameters oder Wertebereich berücksichtigt werden.

Weiter vorgeschlagen wird eine Vorrichtung zur Bestimmung mindestens eines Fahrbahnkontaktparameters, der eine Fahrbahn- und/oder Reifeneigenschaft eines Fahrzeugs repräsentiert, wobei die Vorrichtung mindestens einen Fahrzeugsensor und mindestens eine Auswerteeinrichtung umfasst. Die Auswerteeinrichtung kann als Recheneinrichtung ausgebildet sein. Diese kann einen Mikrocontroller oder eine integrierte Schaltung umfassen oder als solche(r) ausgebildet sein.

Erfindungsgemäß umfasst die Vorrichtung mindestens eine Einrichtung zur Detektion eines festgelegten Kalibrierabschnitts in einem Straßennetz, dem ein abschnittsspezifischer Wert oder Wertebereich des mindestens einen Fahrbahnkontaktparameters zugeordnet ist. Diese Einrichtung kann insbesondere eine Positionsbestimmungseinrichtung zur Bestimmung einer Eigenposition des Fahrzeugs umfassen.

Diese Einrichtung kann z.B. eine Kommunikationseinrichtung zum Abruf von Informationen über festgelegte Kalibrierabschnitte sowie Informationen über die Lage in einem Referenzkoordinatensystem umfassen. Mittels der Kommunikationseinrichtung kann, insbesondere in drahtloser Art und Weise, derartige Informationen von einer Servereinrichtung abgerufen werden.

Weiter wird durch die Einrichtung zur Detektion bestimmt, ob sich das Fahrzeug in einem Kalibrierabschnitt befindet. Dies kann insbesondere durch Vergleich der Fahrzeug(eigen)position mit Informationen über die räumliche Lage von Kalibrierbereichen erfolgen. Weiter wird durch die Auswerteeinrichtung der mindestens eine Fahrbahnkontaktparameter durch Auswertung mindestens eines Ausgangssignals des Fahrzeugsensors bestimmt, wobei das Ausgangssignal während der Fahrt des Fahrzeugs in dem mindestens einen Kalibrierabschnitt erzeugt wird.

Weiter kann die Vorrichtung eine Einrichtung zur Bestimmung des abschnittspezifischen Werts oder Wertebereichs umfassen.

Die Vorrichtung ist hierbei derart ausgebildet, dass ein Verfahren gemäß einer der in dieser Offenbarung beschriebenen Ausführungsformen zur Bestimmung mindestens eines Fahrbahnkontaktparameters der Vorrichtung durchführbar ist. Somit ermöglicht die Vorrichtung die Durchführung eines Verfahrens mit den entsprechend erläuterten technischen Vorteilen.

Die Erfindung wird anhand von Ausführungsbeispielen näher erläutert. Die Figuren zeigen:
- Fig. 1: ein schematisches Flussdiagramm des erfindungsgemäßen Verfahrens zur Bestimmung mindestens eines Fahrbahnkontaktparameters eines Fahrzeugs,
- Fig. 2: ein schematisches Flussdiagramm eines Verfahrens zur Kalibrierung eines Fahrzeugs,
- Fig. 3: ein schematisches Flussdiagramm eines erfindungsgemäßen Verfahrens zur Überwachung eines Kalibrierzustands,
- Fig. 4: ein schematisches Flussdiagramm eines erfindungsgemäßen Verfahrens in einer weiteren Ausführungsform,
- Fig. 5: eine schematische Darstellung eines Straßennetzes und
- Fig. 6: ein schematisches Blockschaltbild einer erfindungsgemäßen Vorrichtung.

Nachfolgend bezeichnen gleiche Bezugszeichen Elemente mit gleichen oder ähnlichen technischen Merkmalen.

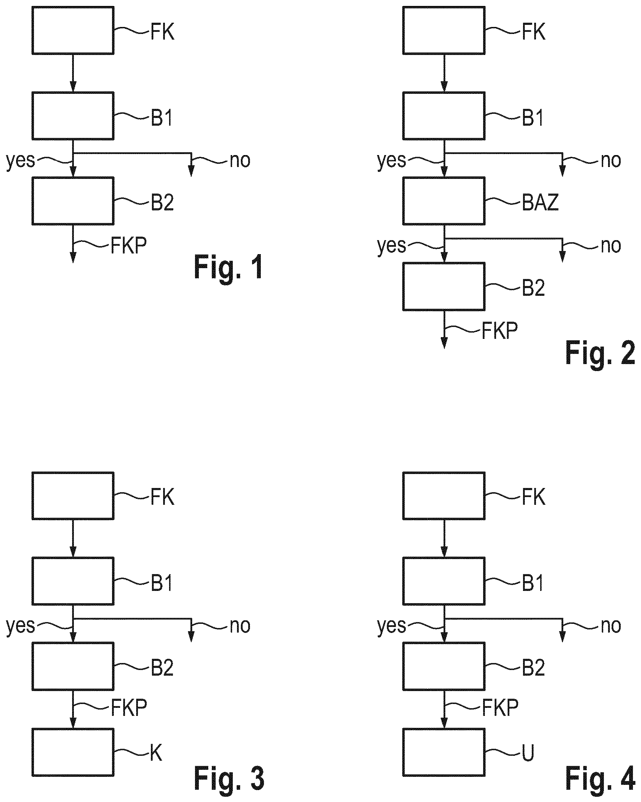

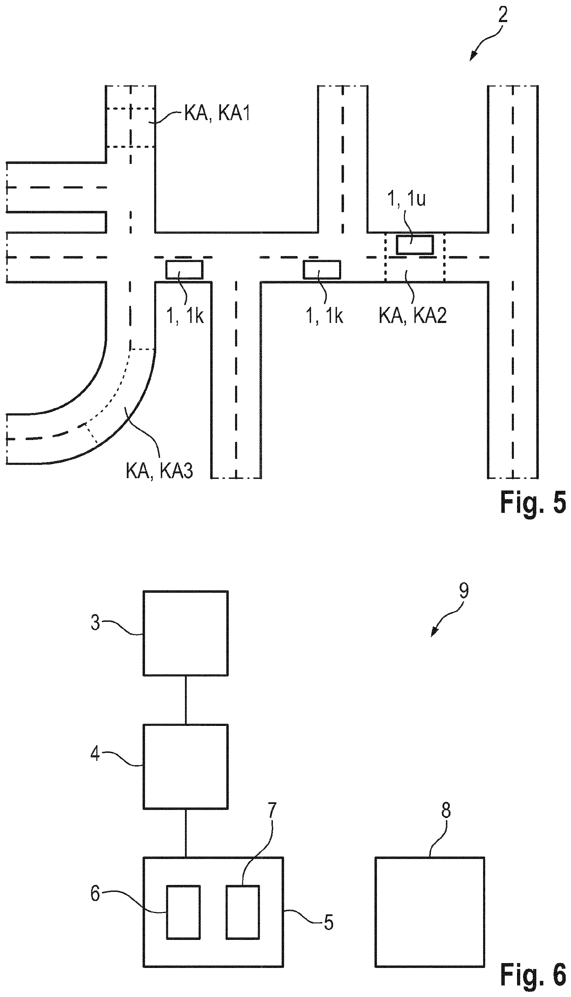

Fig. 1 zeigt ein schematisches Flussdiagramm eines erfindungsgemäßen Verfahrens zur Bestimmung mindestens eines Fahrbahnkontaktparameters FKP eines Fahrzeugs 1 (siehe Fig. 5), wobei der Fahrbahnkontaktparameter FKP eine Fahrbahn- und/oder eine Reifeneigenschaft des Fahrzeugs 1 repräsentiert. Der Fahrbahnkontaktparameter FKP kann insbesondere einen Fahrbahnnässegrad repräsentieren.

Hierbei erfolgt ein Festlegen FK mindestens eines Kalibrierabschnitts KA (siehe Fig. 5) in einem Straßennetz 2, wobei dem Kalibrierabschnitt KA mindestens ein abschnittsspezifischer Wert oder Wertebereich des mindestens einen Fahrbahnkontaktparameters FKP zugeordnet ist. Diese Wert oder Wertebereich kann ein konstanter Wert oder Wertebereich sein.

Weiter erfolgt nach diesem Festlegen FK ein Bestimmen B1, ob sich das Fahrzeug 1 in dem Kalibrierabschnitt KA befindet. Hierzu kann z.B. eine Eigenposition des Fahrzeugs 1 bestimmt werden und mit gespeicherten Informationen über eine räumliche Lage des Kalibrierabschnitts KA verglichen werden, wobei diese räumlichen Informationen z.B. aus einer nicht dargestellten Speichereinrichtung, die insbesondere Teil einer Servereinrichtung sein kann, abgerufen werden.

Wird detektiert, dass sich das Fahrzeug 1 in dem Kalibrierabschnitt KA befindet, so erfolgt ein Bestimmen B2 des Fahrbahnkontaktparameters FKP durch Auswertung mindestens eines Ausgangssignals eines Fahrzeugsensors 3, welches während der Fahrt des Fahrzeugs 1 in dem mindestens einen Kalibrierabschnitt KA erzeugt wird. Wird festgestellt, dass sich das Fahrzeug 1 nicht in einem Kalibrierabschnitt KA befindet, so erfolgt kein Bestimmen B2 des mindestens einen Fahrbahnkontaktparameters FKP.

Das Festlegen FK des mindestens einen Kalibrierabschnitts KA kann in Abhängigkeit von Konstruktionsinformationen und/oder in Abhängigkeit von Wetterinformationen und/oder in Abhängigkeit von Verkehrsinformationen erfolgen. Dies wurde vorhergehend bereits erläutert. Auch kann das Festlegen FK erfolgen, indem für einen Straßenabschnitt, insbesondere mit vorbestimmter Position und/oder Länge, der Fahrbahnkontaktparameter FKP von einer Mehrzahl von kalibrierten Fahrzeugen 1k (siehe Fig. 5) bestimmt wird, wobei dieser Straßenabschnitt als Kalibrierabschnitt KA abgelegt wird, falls die in einem vorbestimmten Zeitintervall von mindestens einer vorbestimmten Anzahl von kalibrierten Fahrzeugen 1k bestimmten Fahrbahnkontaktparameter FKP nicht mehr als ein vorbestimmtes Maß voneinander abweichen. Weichen jedoch diese Fahrbahnkontaktparameter FKP um mehr als das vorbestimmte Maß voneinander ab, so wird dieser Straßenabschnitt nicht als Kalibrierabschnitt KA festgelegt.

Fig. 2 zeigt ein schematisches Flussdiagramm eines erfindungsgemäßen Verfahrens in einer weiteren Ausführungsform. Im Unterschied zu der in Fig. 1 dargestellten Ausführungsform erfolgt nach dem Bestimmen B1, ob sich das Fahrzeug 1 in dem Kalibrierabschnitt befindet, ein Bestimmen BAZ eines Aktivierungszustands des Kalibrierabschnitts KA, wenn sich das Fahrzeug 1 in dem Kalibrierabschnitt KA befindet. Dann wird der Fahrbahnkontaktparameter FKP ein wie in Fig. 1 dargestelltes Bestimmen B2 nur dann bestimmt, wenn ein aktiver Zustand des Kalibrierabschnitts KA detektiert wurde. Wurde ein deaktivierter Zustand des Kalibrierabschnitts KA detektiert, so erfolgt kein Bestimmen B2 des Fahrbahnkontaktparameters FKP.

Der Aktivierungszustand des Kalibrierabschnitts KA kann, wie vorhergehend erläutert, in Abhängigkeit von Wetter- und/oder in Abhängigkeit von Verkehrsinformationen hergestellt werden. Auch ist es möglich, dass ein aktivierter Kalibrierabschnitt KA aktiviert wird, falls in die einem vorbestimmten Zeitintervall von mindestens einer vorbestimmten Anzahl von kalibrierten Fahrzeugen 1k bestimmten Fahrbahnkontaktparameter FKP nicht mehr als ein vorbestimmtes Maß voneinander abweichen.

Entsprechend kann ein deaktivierter Zustand eines aktivierten Kalibrierabschnitts KA eingestellt werden, wenn derart bestimmte Fahrbahnkontaktparameter FKP mehr als ein vorbestimmtes Maß voneinander abweichen.

Fig. 3 zeigt ein schematisches Flussdiagramm eines erfindungsgemäßen Kalibrierungsverfahrens für ein unkalibriertes Fahrzeug 1u (siehe Fig. 5). Zusätzlich zu den Schritten des in Fig. 1 dargestellten Verfahrens erfolgt ein Kalibrieren K nach dem Bestimmen B2 des Fahrbahnkontaktparameters FKP, indem der wie vorgeschlagen bestimmte Fahrbahnkontaktparameter FKP mit dem abschnittsspezifischen Wert oder Wertebereich des Kalibrierabschnitts KA verglichen wird und die Auswertung des Ausgangssignals des Fahrzeugsensors 3 derart angepasst wird, dass der Fahrbahnkontaktparameter FKP, der mit angepasster Auswertung bestimmt wird, nicht mehr als ein vorbestimmtes Maß von dem abschnittsspezifischen Wert oder Wertebereich abweicht.

Fig. 4 zeigt ein schematisches Flussdiagramm eines erfindungsgemäßen Verfahrens zur Überwachung eines Kalibrierzustands eines kalibrierten Fahrzeugs 1k (siehe Fig. 5). Im Unterschied zu der in Fig. 3 dargestellten Ausführungsform des Verfahrens erfolgt nach dem Bestimmen B2 des Fahrbahnkontaktparameters FKP ein Überwachen U des Kalibrierzustands, wobei ein unkalibrierter Zustand des kalibrierten Fahrzeugs detektiert wird, wenn der durch das Bestimmen B2 bestimmte Fahrbahnkontaktparameter FKP mehr als ein vorbestimmtes Maß von dem abschnittsspezifischen Wert oder Wertebereich abweicht. Ein weiterhin kalibrierter Zustand des kalibrierten Fahrzeugs 1k wird detektiert, wenn der Fahrbahnkontaktparameter FKP nicht mehr als ein vorbestimmtes Maß von dem abschnittsspezifischen Wert oder Wertebereich abweicht.

Fig. 5 zeigt ein schematisches Schaubild eines Straßennetzes 2. Ebenfalls sind Fahrzeuge 1 dargestellt. Das Straßennetz 2 umfasst Straßen mit Fahrspuren. Ebenfalls dargestellt sind Fahrbahnmarkierungen.

Weiter dargestellt sind Kalibrierabschnitte KA, die durch gepunktete Linien umrandet sind.

Hierbei ist ein erster Kalibrierabschnitt KA1 und ein zweiter Kalibrierabschnitt KA2 ein aktivierter Kalibrierabschnitt KA. Ein dritter Kalibrierabschnitt KA3 ist ein deaktivierter Kalibrierabschnitt.

Dargestellt ist ein unkalibriertes Fahrzeug 1u, welches sich im aktivierten, zweiten Kalibrierabschnitt KA2 befindet. Dieses Fahrzeugs 1u kann, wie in Bezug auf die in Fig. 3 dargestellte Ausführungsform erläutert, einen Fahrbahnkontaktparameter FKP (siehe Fig. 3) durch Auswertung eines Ausgangssignals eines Fahrzeugsensors 3 (siehe Fig. 6) bestimmen, wobei dieses Ausgangssignal während der Fahrt des Fahrzeugs 1u in dem zweiten Kalibrierabschnitt KA2 erzeugt wird, wobei dann wie in Bezug auf Fig. 3 erläutert ein Kalibrieren K erfolgt.

Weiter dargestellt sind kalibrierte Fahrzeuge 1k. Diese können in den Kalibrierabschnitt KA und davon verschiedenen Abschnitten des Straßennetzes 2 einen Fahrbahnkontaktparameter FKP bestimmen. In Abhängigkeit dieser Parameter kann dann der straßen- oder kontaktabschnittspezifische Wert oder Wertebereich eines Fahrbahnkontaktparameters FKP festgelegt werden.

Fig. 6 zeigt ein schematisches Blockschaltbild einer erfindungsgemäßen Vorrichtung 9 zur Bestimmung mindestens eines Fahrbahnkontaktparameters FKP, der eine Fahrbahn- und/oder Reifeneigenschaft eines Fahrzeugs 1 repräsentiert. Die Vorrichtung umfasst mindestens einen Fahrzeugsensor 3 und mindestens eine Auswerteeinrichtung 4. Weiter umfasst die Vorrichtung 9 mindestens eine Einrichtung 5 zur Detektion eines festgelegten Kalibrierabschnitts KA in einem Straßennetz 2 (siehe Fig. 5). Diese Einrichtung 5 kann einen Positionssensor 6 zur Erfassung einer Eigenposition des Fahrzeugs 1 umfassen. Weiter kann die Einrichtung 5 eine Kommunikationseinrichtung 7 zum Abruf von Informationen über die Lage von Kalibrierabschnitten KA sowie von Informationen über einen Aktivierungszustand dieser Kalibrierabschnitte KA von einer Servereinrichtung 8 umfassen.

Weiter kann durch diese Einrichtung 5, die signal- und/oder datentechnisch mit der Auswerteeinrichtung 4 verbunden ist, bestimmt werden, ob sich das Fahrzeug 1 in einem Kalibrierabschnitt KA, insbesondere in einem aktiven oder aktivierten Kalibrierabschnitt KA, befindet. Weiter wird durch die Auswerteeinrichtung 4 der mindestens eine Fahrbahnkontaktparameter FKP, wie z.B. in Bezug auf Fig. 1 erläutert, durch Auswertung eines Ausgangssignals des Fahrzeugsensors 3, der signal- und/oder datentechnisch mit der Auswerteeinrichtung 4 verbunden ist, bestimmt, wobei dieses Ausgangssignal während der Fahrt des Fahrzeugs 1 in dem mindestens einen Kalibrierabschnitt erzeugt wird.

Weiter kann die Vorrichtung 9 eine nicht dargestellte Einrichtung zur Bestimmung eines abschnittsspezifischen Werts oder Wertebereichs des mindestens einen Fahrbahnkontaktparameters FKP umfassen. Diese kann Teil der Einrichtung 5 zur Detektion sein. Dann kann die Auswerteeinrichtung 4 das vorhergehend erläuterte Kalibrieren K oder Überwachen U durchführen.

### Bezugszeichenliste

- FK: Festlegen
- B1: Bestimmen
- B2: Bestimmen des Fahrbahnkontaktparameters
- BAZ: Bestimmen des Aktivierungszustands
- FKP: Fahrbahnkontaktparameter
- K: Kalibrieren
- U: Überwachen
- KA: Kalibrierabschnitt
- KA1: erster Kalibrierabschnitt
- KA2: zweiter Kalibrierabschnitt
- KA3: dritter Kalibrierabschnitt
- 1: Fahrzeug
- 1k: kalibriertes Fahrzeug
- 1u: unkalibriertes Fahrzeug
- 2: Straßennetz
- 3: Fahrzeugsensor
- 4: Auswerteeinrichtung
- 5: Einrichtung zur Detektion
- 6: Positionssensor
- 7: Kommunikationseinrichtung
- 8: Servereinrichtung
- 9: Vorrichtung

## Patentansprüche

1. Verfahren zur Bestimmung mindestens eines Fahrbahnkontaktparameters (FKP) eines Fahrzeugs (1), der eine Fahrbahn- und/oder eine Reifeneigenschaft des Fahrzeugs (1) repräsentiert, umfassend:
• Festlegen (FK) mindestens eines Kalibrierabschnitts (KA, KA1, KA2, KA3) in einem Straßennetz (2), wobei dem Kalibrierabschnitt (KA, KA1, KA2, KA3) mindestens ein abschnittsspezifischer Wert oder Wertebereich des mindestens einen Fahrbahnkontaktparameters (FKP) zugeordnet ist, wobei der Wert oder Wertebereich des mindestens einen Fahrbahnkontaktparameters (FKP) einem Gewicht oder einem Gewichtsbereich von Fahrzeugen (1) zugeordnet ist,
• Bestimmen (B1), ob sich das Fahrzeug (1) in dem Kalibrierabschnitt (KA, KA1, KA2, KA3) befindet,
• Bestimmen (B2) des mindestens einen Fahrbahnkontaktparameters (FKP) durch Auswertung mindestens eines Ausgangssignals eines Fahrzeugsensors (3), welches während der Fahrt des Fahrzeugs (1) in dem mindestens einen Kalibrierabschnitt (KA, KA1, KA2, KA3) erzeugt wird, wobei der mindestens eine Fahrbahnkontaktparameter (FKP) mit dem abschnittsspezifischen Wert oder Wertebereich verglichen wird, wobei ein kalibrierter Zustand eines unkalibrierten Fahrzeugs (1u) unter Verwendung des gewichts- und abschnittsspezifischen Werts oder Wertebereichs hergestellt oder ein unkalibrierter Zustand eines kalibrierten Fahrzeugs (1k) detektiert wird, wenn der mindestens eine Fahrbahnkontaktparameter (FKP) mehr als ein vorbestimmtes Maß von dem gewichts- und abschnittspezifischen Wert oder Wertebereich abweicht.

2. Verfahren nach Anspruch 1, **dadurch gekennzeichnet, dass** zur Herstellung des kalibrierten Zustands die Auswertung des Ausgangssignals derart angepasst wird, dass der mindestens eine Fahrbahnkontaktparameter (FKP) nicht mehr als ein vorbestimmtes Maß von dem abschnittspezifischen Wert oder Wertebereich abweicht.

3. Verfahren nach einem der Ansprüche 1 oder 2, **dadurch gekennzeichnet, dass** ein kalibrierter Zustand eines unkalibrierten Fahrzeugs (1u) unter Verwendung von abschnittsspezifischen Werten oder Wertebereichen von mindestens zwei voneinander verschiedenen Kalibrierabschnitten (KA, KA1, KA2, KA3) hergestellt wird.

4. Verfahren nach einem der vorangegangenen Ansprüche, **dadurch gekennzeichnet, dass** der mindestens eine Kalibrierabschnitt (KA, KA1, KA2, KA3) in Abhängigkeit von Konstruktionsinformationen und/oder in Abhängigkeit von Wetterinformationen und/oder in Abhängigkeit von Verkehrsinformationen festgelegt wird.

5. Verfahren nach einem der vorangegangenen Ansprüche, **dadurch gekennzeichnet, dass** ein Aktivierungszustand eines Kalibrierabschnitts (KA, KA1, KA2, KA3) bestimmt wird, wobei das Bestimmen (B2) des mindestens einen Fahrbahnkontaktparameters (FKP) durch Auswertung mindestens eines Ausgangssignals eines Fahrzeugsensors (3) nur dann erfolgt, wenn ein aktiver Zustand des Kalibrierabschnitts (KA, KA1, KA2, KA3) detektiert wird.

6. Verfahren nach Anspruch 5, **dadurch gekennzeichnet, dass** der Aktivierungszustand des Kalibrierabschnitts (KA, KA1, KA2, KA3) in Abhängigkeit von Wetterinformationen und/oder Verkehrsinformationen eingestellt wird.

7. Verfahren nach einem der vorangegangenen Ansprüche, **dadurch gekennzeichnet, dass** für einen Straßenabschnitt der mindestens eine Fahrbahnkontaktparameter (FKP) von einer Mehrzahl von kalibrierten Fahrzeugen (1k) bestimmt wird, wobei der Straßenabschnitt als Kalibrierabschnitt (KA, KA1, KA2, KA3) festgelegt wird oder die Festlegung des Straßenabschnitts als Kalibrierabschnitt (KA, KA1, KA2, KA3) aufrechterhalten oder ein deaktivierter Kalibrierabschnitt (KA3) aktiviert wird, falls die in einem vorbestimmten Zeitintervall von mindestens einer vorbestimmten Anzahl von kalibrierten Fahrzeugen (1k) bestimmten Fahrbahnkontaktparameter (FKP) nicht mehr als ein vorbestimmtes Maß voneinander abweichen, wobei der Straßenabschnitt nicht als Kalibrierabschnitt (KA, KA1, KA2, KA3) festgelegt wird oder die Festlegung des Straßenabschnitts als Kalibrierabschnitt (KA, KA1, KA2, KA3) nicht aufrechterhalten oder der Kalibrierabschnitt (KA1, KA2) deaktiviert wird, falls die in dem vorbestimmten Zeitintervall von mindestens einer vorbestimmten Anzahl von kalibrierten Fahrzeugen (1k) bestimmten Fahrbahnkontaktparameter (FKP) mehr als ein vorbestimmtes Maß voneinander abweichen oder die Anzahl der in dem vorbestimmten Zeitintervall bestimmten Fahrbahnkontaktparameter (FKP) kleiner als ein vorbestimmter Schwellwert ist.

8. Verfahren nach einem der vorangegangenen Ansprüche, **dadurch gekennzeichnet, dass** für einen Kalibrierabschnitt (KA, KA1, KA2, KA3) oder einen nicht als Kalibrierabschnitt festgelegten Straßenabschnitt der abschnittsspezifische Wert oder Wertebereich des mindestens einen Fahrbahnkontaktparameters (FKP) in Abhängigkeit von Fahrbahnkontaktparametern (FKP) bestimmt oder aktualisiert wird, die von kalibrierten Fahrzeugen (1k) bestimmt werden.

9. Verfahren nach einem der vorangegangenen Ansprüche, **dadurch gekennzeichnet, dass** der Fahrbahnkontaktparameter (FKP) ein Fahrbahnnässegrad ist.

10. Verfahren nach einem der vorangegangenen Ansprüche, **dadurch gekennzeichnet, dass** durch Auswertung eines Ausgangssignals mindestens eines weiteren Fahrzeugsensors das Vorhandensein einer Fahrbahnbegrenzung und/oder eines weiteren Fahrzeugs bei der Fahrt des Fahrzeugs (1) in dem mindestens einen Kalibrierabschnitt (KA, KA1, KA2, KA3) bestimmt wird, wobei der mindestens eine Fahrbahnkontaktparameter (FKP) zusätzlich in Abhängigkeit des Ausgangssignals des weiteren Fahrzeugsensors bestimmt wird.

11. Vorrichtung zur Bestimmung mindestens eines Fahrbahnkontaktparameters (FKP), der eine Fahrbahn- und/oder eine Reifeneigenschaft eines Fahrzeugs (1) repräsentiert, umfassend mindestens einen Fahrzeugsensor (3) und mindestens eine Auswerteeinrichtung (4), wobei die Vorrichtung (9) mindestens eine Einrichtung (5) zur Detektion eines festgelegten Kalibrierabschnitts (KA, KA1, KA2, KA3) in einem Straßennetz (2), dem ein abschnittsspezifischer Wert oder Wertebereich des mindestens einen Fahrbahnkontaktparameters (FKP) zugeordnet ist, umfasst, wobei durch die Einrichtung (5) zur Detektion bestimmt wird, ob sich das Fahrzeug (1) in einem Kalibrierabschnitt (KA, KA1, KA2, KA3) befindet, **dadurch gekennzeichnet, dass** der Wert oder Wertebereich des mindestens einen Fahrbahnkontaktparameters (FKP) einem Gewicht oder einem Gewichtsbereich von Fahrzeugen (1) zugeordnet ist, wobei durch die Auswerteeinrichtung (4) der mindestens eine Fahrbahnkontaktparameter (FKP) durch Auswertung mindestens eines Ausgangssignals des Fahrzeugsensors (3), welches während der Fahrt des Fahrzeugs (1) in dem mindestens einen Kalibrierabschnitt (KA, KA1, KA2, KA3) erzeugt wird, bestimmt wird, wobei der mindestens eine Fahrbahnkontaktparameter (FKP) mit dem abschnittsspezifischen Wert oder Wertebereich verglichen wird, wobei ein kalibrierter Zustand eines unkalibrierten Fahrzeugs (1u) unter Verwendung des gewichts- und abschnittsspezifischen Werts oder Wertebereichs hergestellt oder ein unkalibrierter Zustand eines kalibrierten Fahrzeugs (1k) detektiert wird, wenn der mindestens eine Fahrbahnkontaktparameter (FKP) mehr als ein vorbestimmtes Maß von dem gewichts- und abschnittspezifischen Wert oder Wertebereich abweicht.

## Claims

1. Method for determining at least one roadway contact parameter (FKP) for a vehicle (1), which parameter represents a roadway property and/or a tire property of the vehicle (1), the method comprising:
• defining (FK) at least one calibration portion (KA, KA1, KA2, KA3) in a road network (2), wherein the calibration portion (KA, KA1, KA2, KA3) is assigned at least one portion-specific value or range of values of the at least one roadway contact parameter (FKP), wherein the value or range of values of the at least one roadway contact parameter (FKP) is assigned to a weight or range of weights of vehicles (1),
• determining (B1) whether the vehicle (1) is located in the calibration portion (KA, KA1, KA2, KA3),
• determining (B2) the at least one roadway contact parameter (FKP) by evaluating at least one output signal from a vehicle sensor (3), which signal is generated while the vehicle (1) is traveling in the at least one calibration portion (KA, KA1, KA2, KA3), wherein the at least one roadway contact parameter (FKP) is compared to the portion-specific value or range of values, wherein a calibrated state of an uncalibrated vehicle (1u) is established using the weight-specific and portion-specific value or range of values, or an uncalibrated state of a calibrated vehicle (1k) is detected if the at least one roadway contact parameter (FKP) deviates from the weight-specific and portion-specific value or range of values by more than a predetermined amount.

2. Method according to claim 1, **characterized in that** in order to establish the calibrated state, the evaluation of the output signal is adjusted in such a way that the at least one roadway contact parameter (FKP) does not deviate from the portion-specific value or range of values by more than a predetermined amount.

3. Method according to either of claims 1 and 2, **characterized in that** a calibrated state of an uncalibrated vehicle (1u) is established using portion-specific values or ranges of values from at least two mutually different calibration portions (KA, KA1, KA2, KA3).

4. Method according to any of the preceding claims, **characterized in that** the at least one calibration portion (KA, KA1, KA2, KA3) is defined on the basis of construction information and/or on the basis of weather information and/or on the basis of traffic information.

5. Method according to any of the preceding claims, **characterized in that** an activation state of a calibration portion (KA, KA1, KA2, KA3) is determined, the step of determining (B2) the at least one roadway contact parameter (FKP) by evaluating at least one output signal from a vehicle sensor (3) being carried out only if an active state of the calibration portion (KA, KA1, KA2, KA3) is detected.

6. Method according to claim 5, **characterized in that** the activation state of the calibration portion (KA, KA1, KA2, KA3) is adjusted on the basis of weather information and/or traffic information.

7. Method according to any of the preceding claims, **characterized in that** for a road portion, the at least one roadway contact parameter (FKP) is determined by a plurality of calibrated vehicles (1k), the road portion being defined as a calibration portion (KA, KA1, KA2, KA3) or the definition of the road portion as a calibration portion (KA, KA1, KA2, KA3) being maintained or a deactivated calibration portion (KA3) being activated if the roadway contact parameters (FKP) determined by at least a predetermined number of calibrated vehicles (1k) in a predetermined time interval do not deviate from each other by more than a predetermined amount, the road portion not being defined as a calibration portion (KA, KA1, KA2, KA3) or the definition of the road portion as a calibration portion (KA, KA1, KA2, KA3) not being maintained or the calibration portion (KA1, KA2) being deactivated if the roadway contact parameters (FKP) determined by at least a predetermined number of calibrated vehicles (1k) in the predetermined time interval deviate from each other by more than a predetermined amount or the number of roadway contact parameters (FKP) determined in the predetermined time interval is less than a predetermined threshold value.

8. Method according to any of the preceding claims, **characterized in that** for a calibration portion (KA, KA1, KA2, KA3) or a road portion not defined as a calibration portion, the portion-specific value or range of values of the at least one roadway contact parameter (FKP) is determined or updated on the basis of roadway contact parameters (FKP) determined by calibrated vehicles (1k).

9. Method according to any of the preceding claims, **characterized in that** the roadway contact parameter (FKP) is a roadway wetness degree.

10. Method according to any of the preceding claims, **characterized in that** by evaluating an output signal from at least one further vehicle sensor, the presence of a roadway boundary and/or a further vehicle is determined when the vehicle (1) is traveling in the at least one calibration portion (KA, KA1, KA2, KA3), the at least one roadway contact parameter (FKP) additionally being determined on the basis of the output signal from the further vehicle sensor.

11. Device for determining at least one roadway contact parameter (FKP) which represents a roadway property and/or tire property of a vehicle (1), the device comprising at least one vehicle sensor (3) and at least one evaluation apparatus (4), the device (9) comprising at least one apparatus (5) for detecting a defined calibration portion (KA, KA1, KA2, KA3) in a road network (2), which portion is assigned a portion-specific value or range of values of the at least one roadway contact parameter (FKP), the detection apparatus (5) determining whether the vehicle (1) is located in a calibration portion (KA, KA1, KA2, KA3), **characterized in that** the value or range of values of the at least one roadway contact parameter (FKP) is assigned to a weight or range of weights of vehicles (1), the evaluation apparatus (4) determining the at least one roadway contact parameter (FKP) by evaluating at least one output signal from the vehicle sensor (3), which signal is generated while the vehicle (1) is traveling in the at least one calibration portion (KA, KA1, KA2, KA3), the at least one roadway contact parameter (FKP) being compared to the portion-specific value or range of values, a calibrated state of an uncalibrated vehicle (1u) being established using the weight-specific and portion-specific value or range of values, or an uncalibrated state of a calibrated vehicle (1k) being detected if the at least one roadway contact parameter (FKP) deviates from the weight-specific and portion-specific value or range of values by more than a predetermined amount.

## Revendications

1. Procédé permettant de déterminer au moins un paramètre de contact avec la voie de circulation (FKP) d'un véhicule (1), lequel paramètre représente une propriété de la voie de circulation et/ou des pneus du véhicule (1), comprenant :
• la définition (FK) d'au moins une section de calibrage (KA, KA1, KA2, KA3) dans un réseau routier (2), dans lequel au moins une valeur ou une plage de valeurs spécifique à une section de l'au moins un paramètre de contact avec la voie de circulation (FKP) est associée à la section de calibrage (KA, KA1, KA2, KA3), dans lequel la valeur ou plage de valeurs de l'au moins un paramètre de contact avec la voie de circulation (FKP) est associée à un poids ou à une plage de poids de véhicules (1),
• le fait de déterminer (B1) si le véhicule (1) se trouve dans la section de calibrage (KA, KA1, KA2, KA3),
• la détermination (B2) de l'au moins un paramètre de contact avec la voie de circulation (FKP) par l'évaluation d'au moins un signal de sortie d'un capteur de véhicule (3) qui est généré pendant le déplacement du véhicule (1) dans l'au moins une section de calibrage (KA, KA1, KA2, KA3), dans lequel l'au moins un paramètre de contact avec la voie de circulation (FKP) est comparé avec la valeur ou plage de valeurs spécifique à la section, dans lequel un état calibré d'un véhicule non calibré (1u) est établi en utilisant la valeur ou plage de valeurs spécifique au poids et à la section, ou un état non calibré d'un véhicule calibré (1k) est détecté lorsque l'au moins un paramètre de contact avec la voie de circulation (FKP) s'écarte de la valeur ou plage de valeurs spécifique au poids et à la section de plus d'une grandeur prédéterminée.

2. Procédé selon la revendication 1, **caractérisé en ce que,** pour l'établissement de l'état calibré, l'évaluation du signal de sortie est adaptée de telle sorte que l'au moins un paramètre de contact avec la voie de circulation (FKP) ne s'écarte pas de la valeur ou plage de valeurs spécifique à la section de plus d'une grandeur prédéterminée.

3. Procédé selon l'une des revendications 1 ou 2, **caractérisé en ce qu'**un état calibré d'un véhicule non calibré (1u) est établi en utilisant des valeurs ou des plages de valeurs spécifiques à des sections d'au moins deux sections de calibrage (KA, KA1, KA2, KA3) différentes.

4. Procédé selon l'une des revendications précédentes, **caractérisé en ce que** l'au moins une section de calibrage (KA, KA1, KA2, KA3) est définie en fonction d'informations de construction et/ou en fonction d'informations météorologiques et/ou en fonction d'informations de trafic.

5. Procédé selon l'une des revendications précédentes,
**caractérisé en ce qu'**un état d'activation d'une section de calibrage (KA, KA1, KA2, KA3) est déterminé, dans lequel la détermination (B2) de l'au moins un paramètre de contact avec la voie de circulation (FKP) par l'évaluation d'au moins un signal de sortie d'un capteur de véhicule (3) est effectuée uniquement lorsqu'un état actif de la section de calibrage (KA, KA1, KA2, KA3) est détecté.

6. Procédé selon la revendication 5, **caractérisé en ce que** l'état d'activation de la section de calibrage (KA, KA1, KA2, KA3) est réglé en fonction d'informations météorologiques et/ou d'informations de trafic.

7. Procédé selon l'une des revendications précédentes,
**caractérisé en ce que,** pour une section de route, l'au moins un paramètre de contact avec la voie de circulation (FKP) est déterminé par une pluralité de véhicules calibrés (1k), dans lequel la section de route est définie comme section de calibrage (KA, KA1, KA2, KA3) ou la définition de la section de route comme section de calibrage (KA, KA1, KA2, KA3) est maintenue ou une section de calibrage (KA3) désactivée est activée si les paramètres de contact avec la voie de circulation (FKP) déterminés dans un intervalle de temps prédéterminé par au moins un nombre prédéterminé de véhicules calibrés (1k) ne diffèrent pas les uns des autres de plus d'une grandeur prédéterminée, dans lequel la section de route n'est pas définie comme section d'étalonnage (KA, KA1, KA2, KA3) ou la définition de la section de route comme section d'étalonnage (KA, KA1, KA2, KA3) n'est pas maintenue ou la section d'étalonnage (KA1, KA2) est désactivée si les paramètres de contact avec la voie de circulation (FKP) déterminés dans l'intervalle de temps prédéterminé par au moins un nombre prédéterminé de véhicules calibrés (1k) diffèrent les uns des autres de plus d'une grandeur prédéterminée ou si le nombre de paramètres de contact avec la voie de circulation (FKP) déterminés dans l'intervalle de temps prédéterminé est inférieur à une valeur seuil prédéterminée.

8. Procédé selon l'une des revendications précédentes, **caractérisé en ce que,** pour une section de calibrage (KA, KA1, KA2, KA3) ou une section de route non définie comme section de calibrage, la valeur ou plage de valeurs spécifique à la section de l'au moins un paramètre de contact avec la voie de circulation (FKP) est déterminée ou mise à jour en fonction de paramètres de contact avec la voie de circulation (FKP) qui sont déterminés par des véhicules calibrés (1k).

9. Procédé selon l'une des revendications précédentes, **caractérisé en ce que** le paramètre de contact avec la voie de circulation (FKP) est un degré d'humidité de la voie de circulation.

10. Procédé selon l'une des revendications précédentes, **caractérisé en ce que,** par l'évaluation d'un signal de sortie d'au moins un autre capteur de véhicule, la présence d'une limite de voie de circulation et/ou d'un autre véhicule est déterminée lors du déplacement du véhicule (1) dans l'au moins une section de calibrage (KA, KA1, KA2, KA3), dans lequel l'au moins un paramètre de contact avec la voie de circulation (FKP) est en outre déterminé en fonction du signal de sortie de l'autre capteur de véhicule.

11. Dispositif permettant de déterminer au moins un paramètre de contact avec la voie de circulation (FKP) qui représente une caractéristique de la voie de circulation et/ou des pneus d'un véhicule (1), comprenant au moins un capteur de véhicule (3) et au moins un appareil d'évaluation (4), dans lequel le dispositif (9) comprend au moins un appareil (5) pour la détection d'une section de calibrage (KA, KA1, KA2, KA3) définie dans un réseau routier (2) à laquelle est associée une valeur ou une plage de valeurs spécifique à une section de l'au moins un paramètre de contact avec la voie de circulation (FKP), dans lequel on détermine, au moyen de l'appareil (5) pour la détection, si le véhicule (1) se trouve dans une section de calibrage (KA, KA1, KA2, KA3), **caractérisé en ce que** la valeur ou plage de valeurs de l'au moins un paramètre de contact avec la voie de circulation (FKP) est associée à un poids ou à une plage de poids de véhicules (1), dans lequel l'au moins un paramètre de contact avec la voie de circulation (FKP) est déterminé par l'appareil d'évaluation (4) par évaluation d'au moins un signal de sortie du capteur de véhicule (3), lequel signal de sortie est généré pendant le déplacement du véhicule (1) dans l'au moins une section de calibrage (KA, KA1, KA2, KA3), dans lequel l'au moins un paramètre de contact avec la voie de circulation (FKP) est comparé avec la valeur ou plage de valeurs spécifique à la section, dans lequel un état calibré d'un véhicule non calibré (1u) est établi en utilisant la valeur ou plage de valeurs spécifique au poids et à la section, ou un état non calibré d'un véhicule calibré (1k) est détecté lorsque l'au moins un paramètre de contact avec la voie de circulation (FKP) s'écarte de la valeur ou plage de valeurs spécifique au poids et à la section de plus d'une grandeur prédéterminée.
